# EUROPÄISCHE PATENTSCHRIFT

(11) **EP 4 086 584 B1**
(45) Veröffentlichungstag und Bekanntmachung des Hinweises auf die Patenterteilung: **12.07.2023**
(21) Anmeldenummer: 21172372.1
(22) Anmeldetag: 06.05.2021
(51) Int. Cl.: G01D 5/244, G01D 11/24

(54) **BAUGRUPPE MIT EINEM DREHGEBER UND EINER TOLERANZHÜLSE**
ASSEMBLY WITH A ROTARY ENCODER AND A TOLERANCE SLEEVE
MODULE DOTÉ D'UN CAPTEUR ROTATIF ET D'UN MANCHON DE TOLÉRANCE

(43) Veröffentlichungstag der Anmeldung: 09.11.2022
(73) Patentinhaber: Dr. Johannes Heidenhain GmbH, 83301 Traunreut (DE)
(72) Erfinder: MIX, Stephan, 83250 Marquartstein (DE); RIEPERTINGER, Sebastian, 83139 Söchtenau (DE); JÄGER, Thomas, 83362 Surtal (DE)

(56) Entgegenhaltungen:
- JP-A- 2017 155 816
- US-A1- 2009 027 043

## Beschreibung

### GEBIET DER TECHNIK

Die Erfindung betrifft eine Baugruppe mit einem Drehgeber und einer Toleranzhülse sowie einen den Drehgeber und die Toleranzhülse aufnehmenden Körper gemäß dem Anspruch 1.

Drehgeber werden beispielsweise zur Bestimmung der Winkelposition oder der Drehgeschwindigkeit zweier relativ zueinander drehbarer Maschinenteile verwendet.

Bei induktiven Drehgebern sind häufig Erregerleiterbahnen und Empfängerspuren etwa in Form von Leiterbahnen auf einer gemeinsamen meist mehrlagigen Leiterplatte aufgebracht, die beispielsweise mit einem Stator eines Drehgebers fest verbunden ist. Dieser Leiterplatte gegenüber befindet sich ein Skalenelement, auf dem Teilungsstrukturen aufgebracht sind, und welches mit dem Rotor des Drehgebers drehfest verbunden ist. Wenn an den Erregerspulen ein zeitlich wechselnder elektrischer Erregerstrom angelegt wird, werden in den Empfängerspulen während der Relativdrehung zwischen Rotor und Stator von der Winkelposition abhängige Signale erzeugt. Diese Signale werden dann in einer Auswerteelektronik weiterverarbeitet.

Bei Drehgebern, die nach einem optischen Prinzip arbeiten, wird häufig ein Lichtstrahl durch eine drehbare Scheibe, welche Teilungsstrukturen aufweist, moduliert. Das modulierte Licht wird danach von einem Lichtdetektor empfangen. Die empfangene Lichtintensität beinhaltet die Information über die relative Winkelstellung.

Häufig werden derartige Drehgeber als Messgeräte für elektrische Antriebe, zur Bestimmung der Relativbewegung beziehungsweise der Relativlage von entsprechenden Maschinenteilen eingesetzt. In diesem Fall werden die erzeugten Winkelpositionswerte einer Elektronik zur Ansteuerung der Antriebe über eine entsprechende Schnittstellenanordnung zugeführt.

### STAND DER TECHNIK

Aus der US 2009/0027043 A1 ist ein Drehgeber bekannt, der mit Hilfe einer ringförmigen Toleranzhülse an einem weiteren Körper montiert werden kann.

Eine derartige Anordnung hat den Nachteil, dass bei dieser im Betrieb Zustände auftreten können, welche die Messgüte beziehungsweise die Messgenauigkeit des Drehgebers beeinträchtigen.

### ZUSAMMENFASSUNG DER ERFINDUNG

Der Erfindung liegt die Aufgabe zugrunde eine Baugruppe zu schaffen, die dauerhaft einen zuverlässigen Betrieb des Drehgebers mit hoher Messgenauigkeit ermöglicht.

Diese Aufgabe wird erfindungsgemäß durch die Merkmale des Anspruches 1 gelöst.

Demnach umfasst die erfindungsgemäße Baugruppe einen Drehgeber, eine Toleranzhülse sowie einen den Drehgeber und die Toleranzhülse aufnehmenden Körper. Der Drehgeber weist eine Welle auf, an der ein Skalenelement drehfest fixiert ist. Weiterhin weist der Drehgeber ein Gehäuse auf, in dem eine Abtasteinheit angeordnet ist, die drehfest mit dem Gehäuse verbunden ist. Die Welle ist relativ zum Gehäuse um eine Achse drehbar angeordnet. Das Skalenelement ist durch die Abtasteinheit abtastbar. Weiterhin weist das Gehäuse eine Außenwandung auf, die vorzugsweise geschlossen umlaufend ausgestaltet ist, welche in einem ersten Abschnitt einen radialen ersten Abstand zur Achse aufweist. Die Außenwandung weist in einem zweiten Abschnitt einen radialen zweiten Abstand zur Achse auf. Dabei gilt, dass der erste Abstand größer ist als der zweite Abstand. Zudem weist der Körper eine Ausnehmung auf, in welche der Drehgeber und die Toleranzhülse aufgenommen sind. Die Ausnehmung ist durch eine erste Innenwandung bezogen auf die Achse radial begrenzt, wobei die erste Innenwandung in einem dritten Abschnitt einen radialen dritten Abstand zur Achse aufweist. Außerdem weist die erste Innenwandung in einem vierten Abschnitt einen radialen vierten Abstand zur Achse auf. Der Körper ist so gestaltet, dass der vierte Abstand größer ist als der dritte Abstand. Des Weiteren ist die Ausnehmung durch eine zweite Innenwandung begrenzt, die bezogen auf die Achse einen axialen Anschlag für das Gehäuse bildet, wobei der vierte Abschnitt in axialer Richtung zwischen der zweiten Innenwandung und dem dritten Abschnitt angeordnet ist. Somit liegt der vierte Abschnitt bezogen auf die axiale Richtung näher an der zweiten Innenwandung als der dritte Abschnitt. Die Toleranzhülse umschließt das Gehäuse und ist innerhalb der Ausnehmung so angeordnet, dass sich diese radial zwischen dem ersten Abschnitt und dem vierten Abschnitt befindet. Gleichfalls befindet sich im montierten Zustand der Baugruppe die Toleranzhülse zwischen dem zweiten Abschnitt und dem dritten Abschnitt, wobei die Toleranzhülse zwischen dem Gehäuse und dem Körper radial geklemmt ist.

Der erste, zweite, dritte und vierte Abschnitt erstrecken sich jeweils in axialer Richtung, wobei der erste und / oder der zweite Abschnitt Bereiche auf einer konvexen Mantelfläche einer zylindrischen Außenkontur des Gehäuses sein können, während der dritte und / oder der vierte Abschnitt Bereiche auf einer konkaven Mantelfläche einer zylindrischen Innenkontur der Ausnehmung sein können. Die betreffenden Abschnitte müssen aber nicht zwingend geschlossen umlaufende Flächen sein, vielmehr können diese Flächen insbesondere über den Umfang hinweg auch unterbrochen sein.

Die zweite Innenwandung weist also eine derartige Orientierung auf, dass ein Normalenvektor auf der Innenwandung eine Richtungskomponente parallel zur Achse aufweist.

Mit Vorteil ist die Baugruppe so ausgestaltet, dass die zweite Innenwandung einen axialen Anschlag für die Toleranzhülse bildet.

In weiterer Ausgestaltung der Erfindung weist das Gehäuse zwischen dem ersten Abschnitt und dem zweiten Abschnitt eine erste konische Fläche auf.

Vorteilhafterweise weist die erste Innenwandung zwischen dem dritten Abschnitt und dem vierten Abschnitt eine zweite konische Fläche auf.

Die konischen Flächen sind relativ zur Achse geneigt angeordnet. Sie können als geschlossene umlaufende Flächen ausgestaltet sein oder als über den Umfang unterbrochene Flächen.

Mit Vorteil weist das Gehäuse eine umlaufende Außenwandung auf.

In weiterer Ausgestaltung der Erfindung weist die erste Innenwandung eine umlaufende Innenkontur auf.

Prinzipiell wird zwischen Drehgebern mit Eigenlagerung und Drehgebern ohne Eigenlagerung, im Folgenden als lagerlose Drehgeber bezeichnet, unterschieden. Drehgeber mit Eigenlagerung weisen üblicherweise vergleichsweise kleine Wälzlager auf, so dass die relativ zueinander drehbaren Bauteilgruppen innerhalb des betreffenden Drehgebers in definierter axialer und radialer Position relativ zueinander angeordnet sind. Dagegen muss bei den lagerlosen Drehgebern bei der Montage an einer Maschine darauf geachtet werden, dass die zueinander drehbaren Bauteilgruppen in der richtigen Position insbesondere im korrekten axialen Abstand zueinander festgelegt werden und dass diese Position im Betrieb des Drehgebers unverändert bleibt. Die Erfindung ist insbesondere in Verbindung mit einem lagerlosen Drehgeber vorteilhaft.

Vorteilhafte Ausbildungen der Erfindung entnimmt man den abhängigen Ansprüchen.

Weitere Einzelheiten und Vorteile des erfindungsgemäßen Drehgebers ergeben sich aus der nachfolgenden Beschreibung eines Ausführungsbeispiels anhand der beiliegenden Figuren.

### KURZE BESCHREIBUNG DER ZEICHNUNGEN

- Figur 1: eine Explosionsdarstellung einer Baugruppe,
- Figur 2: eine Schnittdarstellung eines Drehgebers,
- Figur 3: eine Schnittdarstellung durch einen Körper, der hier als Motorgehäuse dient,
- Figur 4: eine Schnittdarstellung der Baugruppe,
- Figur 5: eine Detailansicht der Schnittdarstellung gemäß der Figur 4.

### BESCHREIBUNG DER AUSFÜHRUNGSFORMEN

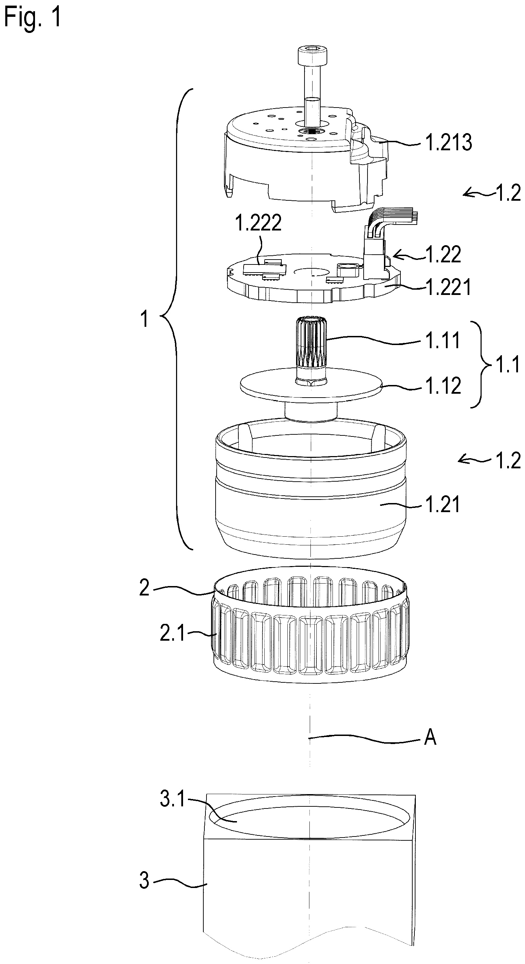

Die Erfindung betrifft gemäß der Figur 1 eine Baugruppe, die einen Drehgeber 1, eine Toleranzhülse 2 und einen Körper 3, beispielsweise ein Motorgehäuse eines Elektroantriebes umfasst.

Demnach umfasst der Drehgeber 1 eine erste Bauteilgruppe 1.1 und eine zweite Bauteilgruppe 1.2, wobei die Bauteilgruppen 1.1, 1.2 relativ zueinander um eine Achse A drehbar sind. Häufig dient die erste Bauteilgruppe 1.1 als Rotor und die zweite Bauteilgruppe 1.2 als Stator.

Die erste Bauteilgruppe 1.1 umfasst eine Welle 1.11 beziehungsweise eine Drehgeberwelle. An der Welle 1.11 des Drehgebers 1 ist ein Skalenelement 1.12 beziehungsweise eine Skala drehfest fixiert. Das Skalenelement 1.12 umfasst eine Teilung, wobei das Skalenelement 1.12 im vorgestellten Ausführungsbeispiel als eine Ringscheibe aus Leiterplattenmaterial ausgebildet ist, an deren stirnseitiger Ringfläche eine Teilung angeordnet ist. Das Skalenelement 1.12 besteht aus einem Substrat, welches im dargestellten Ausführungsbeispiel aus Epoxydharz hergestellt ist und auf welchem eine Teilungsspur oder mehrere Teilungsspuren ringförmig und bezüglich der Achse A zentriert angeordnet ist beziehungsweise sind. Eine Teilungsspur besteht üblicherweise jeweils aus einer periodischen Abfolge von alternierend angeordneten elektrisch leitfähigen Teilungsbereichen und nichtleitfähigen Teilungsbereichen.

Das zur zweiten Bauteilgruppe 1.2 gehörende Gehäuse 1.21 umfasst einen Deckel 1.213 und dient dazu den Innenraum des Drehgebers 1 vor Umwelteinflüssen zu schützen. Im Inneren des Gehäuses 1.21 befindet sich relativ zum Gehäuse 1.21 drehfest fixiert eine Abtasteinheit 1.22, welche zur Erfassung einer Winkelposition zwischen der Abtasteinheit 1.22 und dem Skalenelement 1.12 bestimmt ist. Im vorgestellten Ausführungsbeispiel basiert der Drehgeber auf einem induktiven Abtastprinzip. Die Abtasteinheit 1.22 umfasst eine mehrlagige Leiterplatte 1.221. Zwei der Lagen sind so strukturiert, dass diese als Empfängerleiterbahnen und Erregerleiterbahnen dienen. Weiterhin sind auf der Leiterplatte 1.221 elektronische Bauteile 1.222 montiert. Zum Betrieb der Erregerleiterbahnen und zur Verarbeitung der von den Empfängerleiterbahnen empfangenen Signale ist eine elektronische Schaltung erforderlich. Die elektronischen Bauteile 1.222 sind Bestandteil dieser Schaltung, die zur Versorgung der Erregerleiterbahnen und zur Verarbeitung der empfangenen Signale dient. Zudem ist auf der Leiterplatte 1.221 ein elektrisches Kopplungsstück zur Herstellung einer Steckverbindung mit einem Gegenstecker eines Kabels montiert.

Im vorgestellten Ausführungsbeispiel ist der Drehgeber 1 als ein lagerloser Drehgeber ausgestaltet, das heißt, dass zwischen der ersten Bauteilgruppe 1.1 und der zweiten Bauteilgruppe 1.2 kein Lager, insbesondere kein Wälzlager angeordnet ist. Demzufolge kann die erste Bauteilgruppe 1.1 relativ zur zweiten Bauteilgruppe 1.2 innerhalb gewisser Grenzen insbesondere in axialer Richtung verschoben werden.

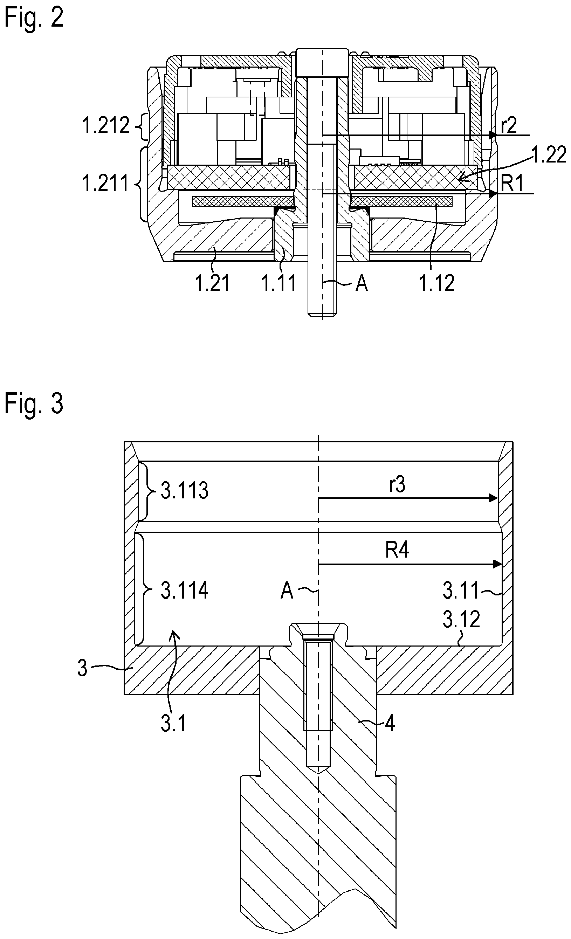

Gemäß der Figur 2 weist das Gehäuse 1.21 eine konvexe Außenwandung auf, welche in einem ersten Abschnitt 1.211 einen radialen ersten Abstand R1 zur Achse A aufweist. Der erste Abschnitt 1.211 ist im vorgestellten Ausführungsbeispiel als eine zylindrische Mantelfläche ausgestaltet. Der erste Abstand R1 ist als der Abstand zwischen einem Punkt auf der besagten Mantelfläche und der Achse A zu sehen.

Mit anderen Worten beträgt der Außendurchmesser des Gehäuses 1.21 im ersten Abschnitt 1.211 das Zweifache des ersten Abstands R1 (2xR1).

Axial versetzt zum ersten Abschnitt 1.211 weist die Außenwandung des Gehäuses 1.21 einen zweiten Abschnitt 1.212 auf. Im zweiten Abschnitt 1.212, der ebenfalls als eine zylindrische Mantelfläche gesehen werden kann, weist die Außenwandung des Gehäuses 1.21 einen radialen zweiten Abstand r2 zur Achse A auf. Da im zweiten Abschnitt 1.212 der Außendurchmesser des Gehäuses 1.21 gegenüber dem Außendurchmesser des Gehäuses 1.21 im ersten Abschnitt 1.211 reduziert ist, gilt dass der erste Abstand R1 größer ist als der zweite Abstand r2.

Weiterhin umfasst die Baugruppe gemäß der Figur 1 eine Toleranzhülse 2. Diese wird um das Gehäuse 1.21 gelegt. Wie üblich weist die Toleranzhülse 2 eingeprägte Sicken 2.1 auf. Bei entsprechender Montage wirken die Sicken 2.1 der Toleranzhülse 2 wie radial komprimierte Druckfedern.

Schließlich umfasst die Baugruppe den Körper 3, der wie oben erwähnt hier ein Motorgehäuse ist. Der Körper 3 weist eine Ausnehmung 3.1 auf, die auch als eine Bohrung mit einer Hinterschneidung bezeichnet werden kann. Gemäß der Figur 3 ist die Ausnehmung 3.1 in radialer Richtung durch eine umlaufende erste Innenwandung 3.11 begrenzt. Diese erste Innenwandung 3.11 weist in einem dritten Abschnitt 3.113 einen radialen dritten Abstand r3 zur Achse A und in einem vierten Abschnitt 3.114 einen radialen vierten Abstand R4 zur Achse A auf. Der vierte Abstand R4 ist größer als der dritte Abstand r3.

Weiterhin ist die Ausnehmung 3.1 durch eine zweite Innenwandung 3.12 begrenzt. Die zweite Innenwandung 3.12 ist so im Raum orientiert, dass ein Normalenvektor auf der Fläche der Innenwandung 3.12 parallel zur Achse A verläuft. Im vorgestellten Ausführungsbeispiel ist die zweite Innenwandung 3.12 eben. Der Körper 3 ist so ausgestaltet, dass der vierte Abschnitt 3.114 in axialer Richtung zwischen der zweiten Innenwandung 3.12 und dem dritten Abschnitt 3.113 angeordnet ist. Zudem weist die zweite Innenwandung 3.12 eine zentrale Bohrung auf, in die eine Motorwelle 4 aufgenommen werden kann. Diese Bohrung weist gegenüber der Motorwelle 4 ein Übermaß auf, so dass sich die Motorwelle 4 frei in der Bohrung drehen kann.

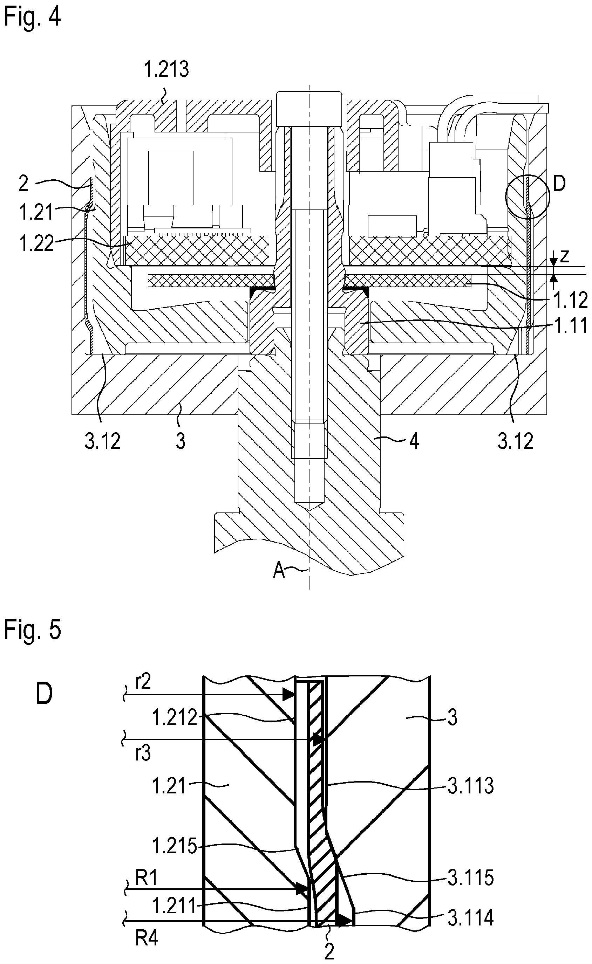

Im Zuge der Montage des Drehgebers 1 im Körper 3 beziehungsweise im Motorgehäuse wird der Drehgeber 1 samt Toleranzhülse 2 in die Ausnehmung 3.1 des Körpers 3 gepresst. Die zweite Innenwandung 3.12 bildet in diesem Zusammenhang bezogen auf die Achse A einen axialen Anschlag für das Gehäuse 1.21 und für der Toleranzhülse 2 (Figur 4). Das Gehäuse 1.21 des Drehgebers 1 ist nun mit Hilfe der Toleranzhülse 2 durch einen Presssitz fest und zentriert im Körper 3 fixiert.

Schließlich kann gemäß der Figur 4 die erste Bauteilgruppe 1.1 des Drehgebers 1, insbesondere die Welle 1.11, mit der Motorwelle 4 verschraubt werden, wobei die erste Bauteilgruppe 1.1 durch die zentrale Schraube gegen einen Absatz der Motorwelle 4 gepresst wird.

Dadurch, dass die Welle 1.11 des Drehgebers 1 an der Motorwelle 4 anschlägt und das Gehäuse 1.21 an der zweiten Innenwandung 3.12, ist die erste Bauteilgruppe 1.1 in axialer Richtung exakt relativ zur zweiten Bauteilgruppe 1.2 positioniert. Somit ist der so genannte Abtastabstand z zwischen dem Skalenelement 1.12 und der Abtasteinheit 1.22 nach erfolgter Montage exakt eingestellt.

Bei einer Relativdrehung zwischen dem Skalenelement 1.12 und der Abtasteinheit 1.22 wird in der Abtasteinheit 1.22 ein von der jeweiligen Winkelposition abhängiges Signal durch Induktionseffekte erzeugt. Für eine präzise Messung der Winkelpositionen ist es wichtig, dass die Signalamplituden ein ausreichendes Maß erreichen. Die Höhe der Signalamplituden hängt unter anderem vom Abtastabstand z ab. Damit vermieden wird, dass sich der Abtastabstand z auch nur um Bruchteile eines Millimeters verändert, zum Beispiel wenn die Baugruppe Temperaturschwankungen und / oder Vibrationen ausgesetzt ist, wurden die Außenwandung des Gehäuses 1.21 und die erste Innenwandung 3.11 der Ausnehmung entsprechend gestaltet.

In der Figur 5 ist eine Detailansicht D (Figur 4) des Gehäuses 1.21 und des Körpers 3 gezeigt. Demnach ist die Toleranzhülse 2, die das Gehäuse 1.21 umschließt, innerhalb der Ausnehmung 3.1 so angeordnet, dass sich diese radial zwischen dem ersten Abschnitt 1.211 und dem vierten Abschnitt 3.114 befindet. Gleichfalls befindet sich die Toleranzhülse 2 radial zwischen dem zweiten Abschnitt 1.212 und dem dritten Abschnitt 3.113. Aufgrund der komprimierten beziehungsweise radial gestauchten Sicken 2.1 ist die Toleranzhülse 2 radial geklemmt. Das Gehäuse 1.21 ist derart ausgestaltet, dass zwischen dem ersten Abschnitt 1.211 und dem zweiten Abschnitt 1.212 eine erste konische Fläche 1.215 vorliegt. Ferner ist der Körper 3 so konstruiert, dass zwischen dem dritten Abschnitt 3.113 und dem vierten Abschnitt 3.114 die erste Innenwandung 3.11 eine zweite konische Fläche 3.115 aufweist. Die Toleranzhülse 2 ist insbesondere zwischen der ersten konischen Fläche 1.215 und der zweiten konischen Fläche 3.115 geklemmt. Durch diese Gestaltung werden die Haltekräfte erhöht, so dass auch ein signifikantes Verlagern der ersten Bauteilgruppe 1.1 des Drehgebers 1 relativ zur zweiten Bauteilgruppe 1.2 infolge von Temperaturschwankungen beziehungsweise Temperaturdifferenzen in den Komponenten der Baugruppe wirksam verhindert wird. Somit kann auch ein gleichbleibender Abtastabstand z gewährleistet werden.

## Patentansprüche

1. Baugruppe umfassend einen Drehgeber (1), eine Toleranzhülse (2) sowie einen den Drehgeber und die Toleranzhülse (2) aufnehmenden Körper (3), wobei
der Drehgeber (1)
- eine Welle (1.11) aufweist, an der ein Skalenelement (1.12) drehfest fixiert ist, und
- ein Gehäuse (1.21) aufweist, in dem eine Abtasteinheit (1.22) angeordnet ist, die drehfest mit dem Gehäuse (1.21) verbunden ist, wobei
die Welle (1.11) relativ zum Gehäuse (1.21) um eine Achse (A) drehbar angeordnet ist und das Skalenelement (1.12) durch die Abtasteinheit (1.22) abtastbar ist, wobei weiterhin
das Gehäuse (1.21) eine Außenwandung aufweist, welche
in einem ersten Abschnitt (1.211) einen ersten Abstand (R1) zur Achse (A) und
in einem zweiten Abschnitt (1.212) einen zweiten Abstand (r2) zur Achse (A) aufweist, wobei
der erste Abstand (R1) größer ist als der zweite Abstand (r2), und
der Körper (3) eine Ausnehmung (3.1) aufweist, wobei die Ausnehmung (3.1) durch
- eine erste Innenwandung (3.11) bezogen auf die Achse (A) radial begrenzt ist, wobei die erste Innenwandung (3.11) in einem dritten Abschnitt (3.113) einen dritten Abstand (r3) zur Achse (A) aufweist und
in einem vierten Abschnitt (3.114) einen vierten Abstand (R4) zur Achse (A) aufweist, wobei
der vierte Abstand (R4) größer ist als der dritte Abstand (r3), und die Ausnehmung (3.1) durch
- eine zweite Innenwandung (3.12) begrenzt ist, die bezogen auf die Achse (A) einen axialen Anschlag für das Gehäuse (1.21) bildet, wobei der vierte Abschnitt (3.114) in axialer Richtung zwischen der zweiten Innenwandung (3.12) und dem dritten Abschnitt (3.113) angeordnet ist, wobei
die Toleranzhülse (2) das Gehäuse (1.21) umschließt und innerhalb der Ausnehmung (3.1) so angeordnet ist, dass sich die Toleranzhülse (2) radial zwischen dem ersten Abschnitt (1.211) und dem vierten Abschnitt (3.114) sowie zwischen dem zweiten Abschnitt (1.212) und dem dritten Abschnitt (3.113) befindet, wobei die Toleranzhülse (2) zwischen dem Gehäuse (1.21) und dem Körper (3) radial geklemmt ist.

2. Baugruppe gemäß dem Anspruch 1, wobei die zweite Innenwandung (3.12) einen axialen Anschlag für die Toleranzhülse (2) bildet.

3. Baugruppe gemäß einem der vorhergehenden Ansprüche, wobei das Gehäuse (1.21) zwischen dem ersten Abschnitt (1.211) und dem zweiten Abschnitt (1.212) eine erste konische Fläche (1.215) aufweist.

4. Baugruppe gemäß einem der vorhergehenden Ansprüche, wobei die erste Innenwandung (3.11) zwischen dem dritten Abschnitt (3.113) und dem vierten Abschnitt (3.114) eine zweite konische Fläche (3.115) aufweist.

5. Baugruppe gemäß einem der vorhergehenden Ansprüche, wobei das Gehäuse (1.21) eine umlaufende Außenwandung aufweist.

6. Baugruppe gemäß einem der vorhergehenden Ansprüche, wobei die erste Innenwandung (3.11) eine umlaufende Innenkontur aufweist.

7. Baugruppe gemäß einem der vorhergehenden Ansprüche, wobei der Drehgeber (1) als ein lagerloser Drehgeber (1) ausgestaltet ist.

## Claims

1. Assembly comprising a rotary encoder (1), a tolerance ring (2), and a body (3) receiving the rotary encoder and the tolerance ring (2), wherein
the rotary encoder (1)
- has a shaft (1.11) to which a scale element (1.12) is fixed for conjoint rotation, and
- a housing (1.21) accommodating a scanning unit (1.22) which is connected for conjoint rotation to the housing (1.21), wherein
the shaft (1.11) is arranged so as to be rotatable relative to the housing (1.21) about an axis (A), and the scale element (1.12) is scannable by the scanning unit (1.22), wherein furthermore the housing (1.21) has an outer wall which
has a first distance (R1) from the axis (A) in a first portion (1.211), and
has a second distance (r2) from the axis (A) in a second portion (1.212), wherein
the first distance (R1) is greater than the second distance (r2), and
the body (3) has a recess (3.1), wherein the recess (3.1)
- is radially delimited with respect to the axis (A) by a first inner wall (3.11),
has a third distance (r3) from the axis (A) in a third portion (3.113) and
has a fourth distance (R4) from the axis (A) in a fourth portion (R4), wherein
the fourth distance (R4) is greater than the third distance (r3),
and the recess (3.1)
- is delimited by a second inner wall (3.12) which forms an axial stop for the housing (2.1) with respect to the axis (A), wherein the fourth portion (3.114) is arranged in an axial direction between the second inner wall (3.12) and the third portion (3.113), wherein
the tolerance ring (2) surrounds the housing (1.21) and is arranged within the recess (3.1) such that the tolerance ring (2) is located radially between the first portion (1.211) and the fourth portion (3.114) and between the second portion (1.212) and the third portion (3.113), wherein the tolerance ring (2) is radially clamped between the housing (1.21) and the body (3).

2. Assembly according to Claim 1, wherein the second inner wall (3.12) forms an axial stop for the tolerance ring (2).

3. Assembly according to one of the preceding claims, wherein the housing (1.21) has a first conical surface (1.215) between the first portion (1.211) and the second portion (1.212).

4. Assembly according to one of the preceding claims, wherein the first inner wall (3.11) has a second conical surface (3.115) between the third portion (3.113) and the fourth portion (3.114).

5. Assembly according to one of the preceding claims, wherein the housing (1.21) has a circumferential outer wall.

6. Assembly according to one of the preceding claims, wherein the first inner wall (3.11) has a circumferential inner contour.

7. Assembly according to one of the preceding claims, wherein the rotary encoder (1) is configured as a bearingless rotary encoder (1).

## Revendications

1. Ensemble comprenant un capteur de rotation (1), une douille de tolérance (2) ainsi qu'un corps (3) recevant le capteur de rotation et la douille de tolérance (2), le capteur de rotation (1)
- présentant un arbre (1.11) sur lequel un élément gradué (1.12) est fixé de manière solidaire en rotation, et
- présentant un boîtier (1.21) dans lequel est agencée une unité de balayage (1.22) qui est reliée de manière solidaire en rotation au boîtier (1.21),
l'arbre (1.11) étant agencé de manière rotative autour d'un axe (A) par rapport au boîtier (1.21) et l'élément gradué (1.12) pouvant être balayé par l'unité de balayage (1.22), en outre
le boîtier (1.21) présentant une paroi extérieure qui
dans une première section (1.211) présente une première distance (R1) par rapport à l'axe (A) et
dans une deuxième section (1.212) présente une deuxième distance (r2) par rapport à l'axe (A),
la première distance (R1) étant supérieure à la deuxième distance (r2), et
le corps (3) présentant un évidement (3.1), l'évidement (3.1) étant délimité radialement par rapport à l'axe (A) par
- une première paroi intérieure (3.11), la première paroi intérieure (3.11) présentant
dans une troisième section (3.113) une troisième distance (r3) par rapport à l'axe (A) et
dans une quatrième section (3.114) une quatrième distance (R4) par rapport à l'axe (A),
la quatrième distance (R4) étant supérieure à la troisième distance (r3), et l'évidement (3.1) étant délimité par
- une deuxième paroi intérieure (3.12) qui, par rapport à l'axe (A), forme une butée axiale pour le boîtier (1.21), la quatrième section (3.114) étant agencée dans la direction axiale entre la deuxième paroi intérieure (3.12) et la troisième section (3.113),
la douille de tolérance (2) entourant le boîtier (1.21) et étant agencée à l'intérieur de l'évidement (3.1) de telle sorte que la douille de tolérance (2) se trouve radialement entre la première section (1.211) et la quatrième section (3.114) ainsi qu'entre la deuxième section (1.212) et la troisième section (3.113), la douille de tolérance (2) étant serrée radialement entre le boîtier (1.21) et le corps (3).

2. Ensemble selon la revendication 1, dans lequel la deuxième paroi intérieure (3.12) forme une butée axiale pour la douille de tolérance (2).

3. Ensemble selon l'une quelconque des revendications précédentes, dans lequel le boîtier (1.21) présente une première surface conique (1.215) entre la première section (1.211) et la deuxième section (1.212).

4. Ensemble selon l'une quelconque des revendications précédentes, dans lequel la première paroi intérieure (3.11) présente une deuxième surface conique (3.115) entre la troisième section (3.113) et la quatrième section (3.114).

5. Ensemble selon l'une quelconque des revendications précédentes, dans lequel le boîtier (1.21) présente une paroi extérieure périphérique.

6. Ensemble selon l'une quelconque des revendications précédentes, dans lequel la première paroi intérieure (3.11) présente un contour intérieur périphérique.

7. Ensemble selon l'une quelconque des revendications précédentes, dans lequel le capteur de rotation (1) est conçu sous la forme d'un capteur de rotation (1) sans palier.
